# EUROPÄISCHE PATENTSCHRIFT

(11) **EP 2 399 045 B1**
(45) Veröffentlichungstag und Bekanntmachung des Hinweises auf die Patenterteilung: **02.10.2013**
(21) Anmeldenummer: 10704565.0
(22) Anmeldetag: 17.02.2010
(51) Int. Cl.: F16H 25/22, F16H 25/24

(54) **KUGELMUTTER FÜR EINEN KUGELGEWINDETRIEB**
BALL NUT FOR A BALL SCREW
ÉCROU À BILLES POUR UNE VIS À BILLES

(30) Priorität: 20.02.2009 DE 102009009851
(43) Veröffentlichungstag der Anmeldung: 28.12.2011
(73) Patentinhaber: Schaeffler Technologies AG & Co. KG, 91074 Herzogenaurach (DE)
(72) Erfinder: ADLER, Dieter, 91074 Herzogenaurach (DE); KREUTZER, Mario, 96515 Sonneberg (DE)
(86) Internationale Anmeldenummer: PCT/EP2010/051988
(87) Internationale Veröffentlichungsnummer: WO 2010/094706

(56) Entgegenhaltungen:
- EP-A2- 1 281 880
- US-A- 2 455 368
- US-B1- 6 453 761

## Beschreibung

Die vorliegende Erfindung betrifft eine Kugelmutter für einen Kugelgewindetrieb sowie derartige Kugelgewindetriebe. Kugelgewindetriebe weisen eine Kugelmutter auf, die auf einer Gewindespindel angeordnet ist. Eine Relativdrehung zwischen der Kugelmutter unter der Gewindespindel wird in eine translatorische Relativbewegungen zwischen der Kugelmutter und der Gewindespindel umgewandelt. Derartige Kugelgewindetriebe können beispielsweise in modernen Kraftfahrzeugen in Servo - Lenkeinrichtungen eingesetzt werden.

Aus US 2455368 ist eine Kugelmutter gemäß dem Oberbegriff des Anspruchs 1 bekannt.

Aus EP 1281880 B1 beispielsweise ist ein Kugelgewindetrieb bekannt geworden, bei dem zwischen der Kugelmutter und der Gewindespindel angeordnete Kugeln in einem schraubenförmig um die Spindelachse der Gewindespindel gewundenen endlosen Kugelkanal endlos umlaufen. Der Kugelkanal weist einen Lastabschnitt auf und einen einen Anfang und ein Ende des Lastabschnittes verbindenden Umlenkabschnitt, wobei der Lastabschnitt gebildet ist durch schraubenförmig um die Spindelachse gewundene Kugelrillen der Gewindespindel und der Kugelmutter. Die Kugeln wälzen an Schultern der Kugelrillen unter Last ab. Der Umlenkabschnitt weist ein Umlenkrohr auf, dass am Außenumfang der Kugelmutter angeordnet ist. Die beiden Enden des Umlenkrohres durchstoßen die Wandlung der Kugelmutter, wobei das eine Rohrende an den Anfang und wobei das andere Ende des Umlenkrohres an das Ende des Lastabschnittes anschließen. In üblicher Weise kann zwischen den Enden des Umlenkrohres und dem Beginn des Lastabschnittes ein Einlaufabschnitt oder auch Auslaufabschnitt ausgebildet sein, so dass die ein- oder auslaufenden Kugeln allmählich be- oder entlastet werden.

Wie den Figuren zu entnehmen ist, erstreckt sich der Lastabschnitt Ober eine Vielzahl von Windungen. Zwar kann ein derartiger Kugelgewindetrieb sehr hohe Axiallasten übertragen, jedoch stellt sich bei belastetem Kugelgewindetrieb eine sehr große Durchschiebekraft der Kugeln durch den endlosen Kugelkanal ein. Um die Durchschiebekraft zu reduzieren, wird in der eingangs genannten Druckschrift eine Maßnahme zur Entlastung der Kugeln im Lastabschnitts vorgeschlagen: die Kugelrille der Kugelmutter wird an einem Umfangsabschnitt des Lastabschnittes entlang der Windung aufgeweitet oder vertieft, so dass in diesem Umfangsabschnitt die Kugeln lediglich an der Gewindespindel geführt sind.

Das Vertiefen oder Verbreitern der Kugelrille am Innenumfang der Kugelmutter ist sehr aufwändig und fertigungstechnisch nur schwierig zu beherrschen.

Aufgabe der vorliegenden Erfindung war es, eine Kugelmutter an sowie einen Kugelgewindetrieb mit einer derartigen Kugelmutter anzugeben, deren Herstellung vereinfacht ist.

Erfindunsgemäß wird diese Aufgabe durch die Kugelmutter gemäß Anspruch 1 sowie durch den Kugelgewindetrieb gemäß Anspruch 8 gelöst. Dadurch, dass die Kugelrille der Kugelmutter durch wenigstens einen schulterfreien Innenumfangsabschnitt der Kugelmutter unterbrochen ist, ist zunächst die Herstellung der Kugelmutter gegenüber der eingangs genannten Kugelmutter deutlich vereinfacht. Anstelle einer nur sehr schwierig beherrschbaren Bearbeitung der Kugelrille wird diese in dem betreffenden Innenum-fangsabschnitt lediglich entfernt. Das kann beispielsweise mit einem Fräser schnell und einfach durchgeführt werden. Ein Nachfahren die Kugelrille entlang der vorgegebenen Steigung der Kugelrille ist nicht erforderlich.

In anderen Worten ausgedrückt: das die Schultern aufweisende Material der Kugelmutter zwischen aufeinanderfolgenden Windungen wird entfernt.

Im Bereich des so freigestellten und schulterfreien Innenumfangsabschnitt ist demzufolge überhaupt keine Kugelrille ausgebildet.

Die Erfindung kann für eingängige und für mehrgängige Kugelmuttern und Kugelgewindetriebe mit den beschriebenen Vorteilen umgesetzt werden. Eine gemeinsame erfindungsgemäße Freistellung am Innenumfang der Kugelmutter kann für mehrere Kugelgänge vorgesehen sein; auch in diesem Fall ist gewährleistet, dass die Kugeln der einzelnen Gänge in den jeweiligen Gängen der Gewindespindel geführt sind, wenn die Kugeln im Bereich der Freistellung sind.

Es ist denkbar, diese derart freigestellten Innenumfangsabschnitte bereits vor dem Erzeugen der Kugelrille am Innenumfang der Kugelmutter bereitzustellen.

Vorzugsweise erstreckt sich dieser schulterfreie Innenumfangsabschnitt über mehr als eine halbe Windung um die Mutterachse. Neben einer deutlich reduzierten Durchschiebekraft bei Kugelgewindetrieben mit erfindungsgemäßen Kugelmuttern können die erfindungsgemäßen Kugelmuttern ferner ein gegenüber bekannten Kugelmuttern reduziertes Gewicht aufweisen. Insbesondere im Automobilbau wird angestrebt, die verwendeten Komponenten möglichst vom Gewicht her leicht zu konstruieren.

Der Durchmesser des schulterfreien Innenumfangsabschnittes kann gleichgroß oder größer als der Durchmesser der Kugelrille im Rillengrund sein. Eine obere Grenze des Durchmessers des schulterfreien Innenumfangsabschnittes ist gegeben zunächst durch die Wanddicke der Kugelmutter sowie durch das Erfordernis, dass bei Verwendung von erfindungsgemäßen Kugelmuttern in Kugelgewindetrieben die Kugeln entlang der Kugelrille der Gewindespindel geführt werden, ohne dass sie im Bereich des schulterfreien Innenumfangsabschnittes vollständig aus der Kugelrille der Gewindespindel herausgehoben werden können.

Somit ist auf einfache Art und Weise erreicht, dass die Kugeln in diesem Innenumfangsabschnitt selbst unter axialer Belastung der Kugelmutter nicht belastet werden, wenn erfindungsgemäße Kugelmuttern in Kugelgewindetrieben eingesetzt werden.

Eine erfindungsgemäße Weiterbildung sieht vor, dass die Kugelrille der Kugelmutter durch mehrere versetzt zueinander angeordnete schulterfreie Innenumfangsabschnitte mehrfach unterbrochen ist. Auf diese Weise kann zunächst das Eigengewicht in der Kugelmutter weiter reduziert werden. Bei Kugelgewindetrieben mit derartig weitergebildeten Kugelmuttern ist die Durchschiebekraft der Kugeln durch den Lastabschnitt demzufolge weiter reduziert.

Erfindungsgemäße Kugelmuttern und Kugelgewindetriebe mit erfindungsgemäßen Kugelmuttern zeigen jedoch ferner wesentliche Vorteile unter axialer Belastung.

Die Anzahl der lastübertragenden Windungen in einem Kugelgewindetrieb ist abhängig von den äußeren zu übertragenden Lasten. Hier ist zu beobachten, dass mit der Länge des Gewindes, also mit der Anzahl der Windungen im Lastabschnitt, die Reibung im Betrieb des Kugelgewindetriebes zunimmt. Ein sich über mehrere Windungen erstreckender Lastabschnitt - der gebildet ist durch Kugelrillen der Kugelmutter sowie der Gewindespindel - erhöht in unerwünschter Weise die Wahrscheinlichkeit, dass die entlang des Lastabschnittes angeordneten Kugeln aufeinander laufen, so dass es zu einem Kugelstau kommen kann. Dadurch kann das Reibungsniveau im Kugelgewindetrieb in unerwünschter Weise erhöht werden. Das bedeutet, dass das Reibungsniveau schwanken kann. Insbesondere bei Verwendung derartiger Kugelgewindetriebe in elektromechanischen Lenkunterstützungen werden solche Schwankungen vom Fahrer unangenehm wahrgenommen.

Bei erfindungsgemäßen Kugelgewindetrieben sind derartige Reibungsschwankungen weitgehend ausgeschlossen, weil ein Stau von Kugeln aufgrund der schulterfreien Innenumfangsabschnitte ausgeschlossen ist.

Kugelgewindetriebe mit erfindungsgemäßen Kugelmuttern zeigen auch eine geringere Geräuschentwicklung als bekannte Kugelgewindetriebe, da hier problemlos sehr lange Lastabschnitte über eine Vielzahl von Windungen bereitgestellt werden können, die durch einen oder auch mehrere versetzt zueinander angeordnete schulterfreie Innenumfangsabschnitte unterbrochen sind, wobei in Bezug auf die Geräuschreduzierung in günstiger Weise lediglich eine einzige Umlenkung erforderlich ist.

Die schulterfreien Innenumfangsabschnitte können als Zlinderfläche am Innenumfang der Kugelmutter ausgebildet und parallel zu einer Ebene sein, die quer zu der Mutterachse angeordnet ist, oder die die Mutterachse unter dem Steigungswinkel der Kugelrillen schneidet.

Nachstehend wird die Erfindung anhand eines in insgesamt 5 Figuren abgebildeten Ausführungsbeispieles näher erläutert. Es zeigen:
Figur 1 eine erfindungsgemäße Kugelmuttern in perspektivischer Darstellung,
Figur 2 einen Längsschnitt durch die erfindungsgemäße Kugelmutter,
Figur 3 die längs geschnittene Kugelmutter aus Figur 1, jedoch mit Kugeln,
Figur 4 einen Kugelgewindetrieb mit der erfindungsgemäßen Kugelmutter und
Figur 5 dem Kugelgewindetrieb aus Figur 4, jedoch hier ohne Kugelmutter, jedoch mit Außenumlenkung.

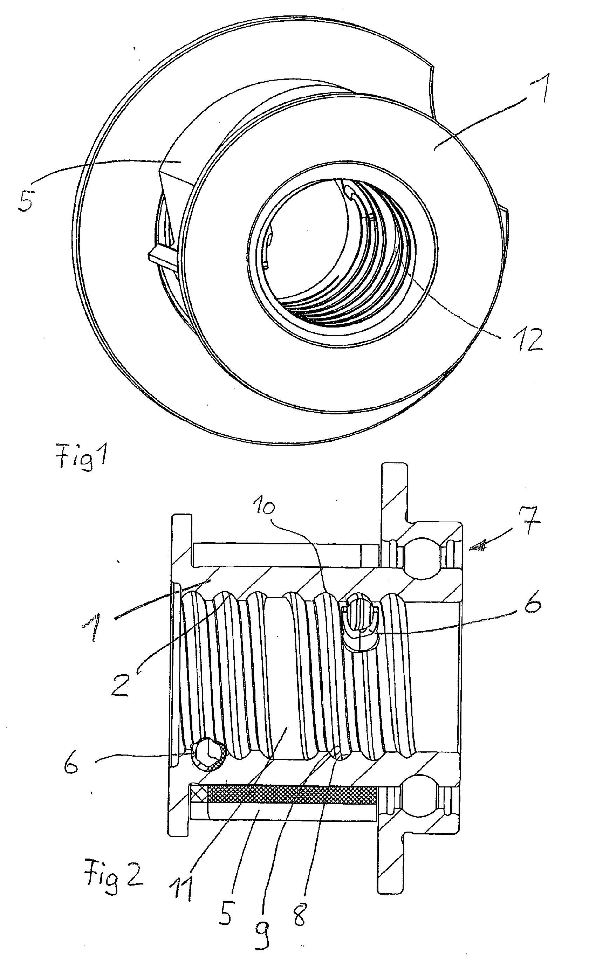

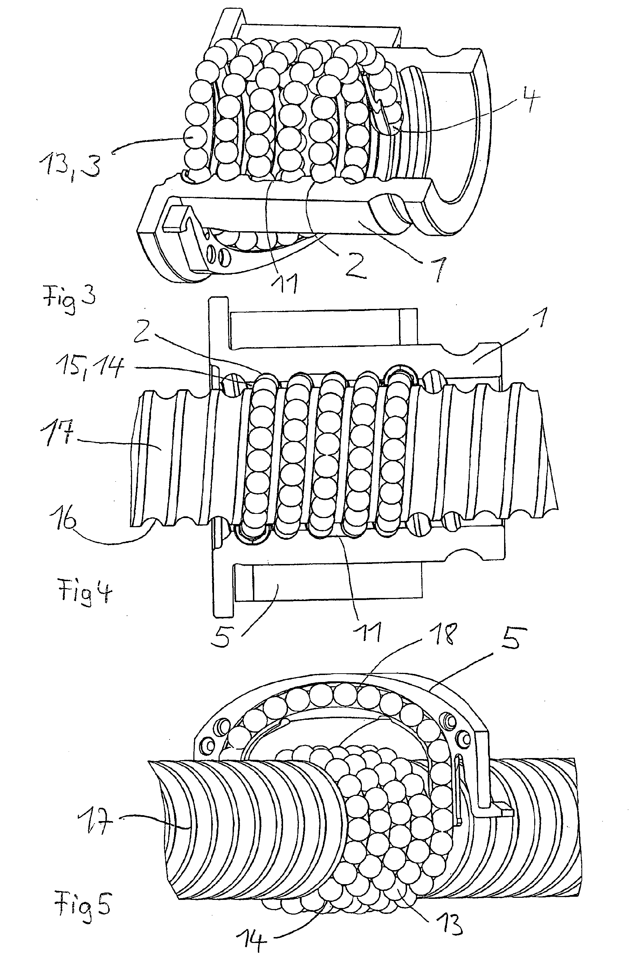

Die Figuren 1 und 2 zeigen eine erfindungsgemäße Kugelmutter 1. Am Innenumfang der Kugelmutter 1 ist eine schraubenförmig um die Mutterachse gewundene, mehrere Windungen aufweisende Kugelrille 2 zum Abwälzen von Kugeln 3 vorgesehen, wie sie beispielsweise in der Figur 3 abgebildet sind. An einem Anfang und an einem Ende der Kugelrille 2 sind Öffnungen 4 für den Durchtritt von Kugeln vorgesehen, wobei diese Öffnungen 4 die Wanddicke der Kugelmutter 1 durchsetzen.

Am Außenumfang der Kugelmutter 1 ist ein Umlenkelement 5 angeordnet, dass den Anfang mit dem Ende der Kugelrille 2 verbindet. Die Kugeln werden außerhalb der Kugelmutter 1 durch das Umlenkelement 5 vom Anfang bis zum Ende der Kugelrille 2 geführt. Figur 2 zeigt die bis zum Innenumfang der Kugelmutter hineinreichenden Enden des Umlenkelementes 5. Die Kugelmutter 1 ist über ein Rillenkugellager 7 drehbar gelagert.

Insbesondere der Figur 2 kann entnommen werden, dass die Kugelrille 2 von Schultern 8,9 begrenzt ist, wobei die hier nicht abgebildeten Kugeln Unter Last an diesen Schultern 8,9 abwälzen. Eine Rillengrund 10 der Kugelrille 2 ist zwischen den einander zugewandten Schultern 8,9 angeordnet.

Der Figur 2 kann ferner entnommen werden, dass die Kugelrille 2 durch einen schulterfreien Innenumfangsabschnitt 11 unterbrochen ist. Diese Unterbrechung erstreckt sich über etwa eine halbe Windung um die Mutterachse. Dieser Innenumfangsabschnitt 11 ist etwa teilzylindrisch am Innenumfang der Kugelmutter 1 ausgebildet. Seine axialen Enden sind im Ausführungsbeispiel parallel zu einer Ebene angeordnet, die die Mutterachse unter dem Steigungswinkel der Kugelrille 2 schneidet. Demzufolge sind diese axialen Enden des Innenumfangsabschnittes 11 parallel zur Kugelrille 2 angeordnet. Der Durchmesser des Innenumfangsabschnittes 11 ist gleichgroß wie der Durchmesser der Kugelmutter 1 im Rillengrund 10, der Durchmesser kann aber auch größer als der Durchmesser im Rillengrund 10 ausgebildet sein.

Im Ausführungsbeispiel ist lediglich ein schulterfreier Innenumfangsabschnitt 11 angeordnet. Bei modifizierten Ausführungsbeispielen ist es jedoch möglich, dass die Kugelrille 2 sich über deutlich mehr Windungen erstreckt, als abgebildet. In diesem Fall mag es zweckmäßig sein, mehrere versetzt zueinander angeordnete schulterfreie Innenumfangsabschnitte 11 vorzusehen, durch die die Kugelrille 2 unterbrochen ist. Das bedeutet, dass zwischen zwei aufeinander folgenden Innenumfangsabschnitten 11 wieder ein Stück Kugelrille 2 der Kugelmutter 1 ausgebildet ist.

In Figur 1 ist ein umfangsseitiges Abschnittsende 12 des schulterfreien Innenumfangsabschnittes 11 zu erkennen. Dass die Schultern 8,9 bildende Material der Kugelmutter 1 ist hier in Umfangsrichtung zunehmend abgetragen, und geht in die teilzylindrische Fläche des Innenumfangsabschnittes 11 über.

Figur 3 zeigt die Kugelmutter 1 mit einem von den Kugeln 3 gebildeten Kugelsatz 13 dieser Kugelsatz 13 wälzt endlos in einem endlosen Kugelkanal 14 um, wie er in der Figur 4 angedeutet ist.

Dieser endlose Kugelkanal 14 weist einen Lastabschnitt 15 auf, der durch die Kugelrille 2 der Kugelmutter 1 sowie durch eine Kugelrille 16 einer Gewindespindel 17 gebildet ist, auf der die Kugelmutter 1 drehbar angeordnet ist. Dieser endlose Kugelkanal 14 weist ferner einen Umlenkabschnitt 18 auf, der an dem weiter oben bereits erwähnten Umlenkelement 5 ausgebildet ist.

Figur 5 zeigt die Gewindespindel 17 mit dem Kugelsatz 13 sowie dem Umlenkelement 5. Hier ist der endlose Kugelkanal deutlich erkennbar. Im Lastabschnitt wälzen die Kugeln an den Schultern 8,9 der hier nicht abgebildeten Spindelmutter sowie an den entsprechenden Schultern der Gewindespindel 17 ab. Lediglich in dem in der Figur 5 nicht weiter dargestellten schulterfreien Innenumfangsabschnitt sind die Kugeln 3 des Kugelsatz 13 entlastet, und werden lediglich an den Schultern der Gewindespindel 17 geführt. Die Kugeln 3 erreichen schließlich das Ende des Lastabschnittes und werden von dort in den Umlenkabschnitt 18 des Umlenkelementes 5 eingeführt. Die Kugeln werden nun entlang dieses Umlenkabschnittes 18 geführt und gelangen schließlich zum Anfang des Lastabschnittes 15, und wälzen erneut im Lastabschnitt 15 an den Schultern in der Kugelrillen ab.

Figur 3 zeigt einen vollständigen Kugelgewindetrieb, der gebildet ist aus der Kugelmutter 1, der Gewindespindel 17, den Kugelsatz 13 sowie dem Umlenkelement 5. Die Spindelachse und die Mutterachse fallen zusammen.

Ist dieser Kugelgewindetrieb unbelastet, greifen also keine äußeren Kräfte an, ist eine Durchschiebekraft des Kugelsatzes 13 durch den endlosen Kugelkanal 14 gegenüber herkömmlichen Kugelgewindetrieben reduziert. Denn im Bereich des schulterfreien Innenumfangsabschnittes 11 sind die Kugeln 3 des Kugelsatzes 13 lediglich entlang der Kugelrille 16 der Gewindespindel 17 geführt, ohne dass es zu unerwünschten Reibungen mit der Spindelmutter 1 kommt.

### Positionszahlenliste

- 1: Kugelmutter
- 2: Kugelrille
- 3: Kugeln
- 4: Öffnung
- 5: Umlenkelement
- 6: Enden
- 7: Rillenkugellager
- 8: Schulter
- 9: Schulter
- 10: Rillengrund
- 11: Innenumfangsabschnitt
- 12: Abschnittsende
- 13: Kugelsatz
- 14: endloser Kugelkanal
- 15: Lastabschnitt
- 16: Kugelrille
- 17: Gewindespindel
- 18: Umlenkabschnitt

## Patentansprüche

1. Kugelmutter (1) für einen Kugelgewindetrieb, die an ihrem Innenumfang eine schraubenförmig um die Mutterachse gewundene, vorzugsweise mehrere Windungen aufweisende Kugelrille (2) zum Abwälzen von Kugeln (3) aufweist, wobei ein am Außenumfang der Kugelmutter (1) angeordnetes Umlenkelement (5) zum Umlenken der Kugeln (3) vorgesehen ist, welches Umlenkelement (5) einen Anfang mit einem Ende der Kugelrille (2) verbindet, und wobei die Kugelrille (2) von Schultern (8,9) der Kugelmutter (1) begrenzt ist, an denen die Kugeln (3) unter Last abwälzbar sind, **dadurch gekennzeichnet, dass** die Kugelrille (2) zwischen ihren Enden, durch wenigstens einen schulterfreien Innenumfangsabschnitt (11) der Kugelmutter (1) unterbrochen ist.

2. Kugelmutter (1) nach Anspruch 1, bei dem sich der schulterfreie Innenumfangsabschnitt (11) über mehr als eine halbe Windung um die Mutterachse erstreckt.

3. Kugelmutter (1) nach Anspruch 1, bei der der Durchmesser des schulterfreien Innenumfangsabschnittes (11) gleich groß oder größer als der Durchmesser der Kugelrille (2) im Rillengrund (10) ist.

4. Kugelmutter (1) nach Anspruch 1, bei der die Kugelrille (2) durch mehrere versetzt zueinander angeordnete schulterfreie Innenumfangsabschnitte (11) mehrfach unterbrochen ist.

5. Kugelmutter (1) nach Anspruch 1, bei der der schulterfreie Innenumfangsabschnitt (11) als Teilzylinderfläche ausgebildet ist.

6. Kugelmutter (1) nach Anspruch 5, bei dem die axialen Enden des schulterfreien Innenumfangsabschnittes (11) parallel zu einer Ebene sind, die quer zu der Mutterachse angeordnet ist.

7. Kugelmutter (1) nach Anspruch 5, bei der die axialen Enden des schulterfreien Innenumfangsabschnittes (11) parallel zu einer Ebene sind, die die Mutterachse unter einem Steigungswinkel der Kugelrille (2) schneidet.

8. Kugelgewindetrieb mit der auf einer Gewindespindel (17) angeordneten Kugelmutter (1) nach einem oder mehreren der vorangegangenen Ansprüche, wobei die Kugeln (3) in wenigstens einem schraubenförmig um die Spindelachse der Gewindespindel (17) gewundenen endlosen Kugelkanal (14) angeordnet sind, welcher Kugelkanal (14) einen Lastabschnitt (15) und einen , einen Anfang und ein Ende des Lastabschnittes (15) verbindenden Umlenkabschnitt (18) aufweist, wobei der Lastabschnitt (15) gebildet ist durch schraubenförmig um die Spindelachse gewundene, von den Schultern (8,9) begrenzte Kugelrillen (2,16) der Kugelmutter (1) und der Gewindespindel (17), wobei der Lastabschnitt (15) durch den wenigstens einen schulterfreien Innenumfangsabschnitt (11) der Kugelmutter (1) unterbrochen ist.

9. Kugelgewindetrieb nach Anspruch 8, bei dem sich der Lastabschnitt (15) zwischen seinem Anfang und seinem Ende über mehr als eine Windung um die Spindelachse herum windet, wobei der Lastabschnitt (15) entlang seiner Windungen mehrfach unterbrochen ist durch mehrere versetzt zueinander angeordnete schulterfreie Innenumfangsabschnitte (11) der Kugelmutter.

## Claims

1. Ball nut (1) for a ball screw, which ball nut has on its inner circumference, for the rolling of balls (3), a ball groove (2) coiled helically about the nut axis and preferably having a plurality of turns, a deflection element (5), arranged on the outer circumference of the ball nut (1), being provided for deflecting the balls (3), which deflection element (5) connects a start of the ball groove (2) to an end of the latter, and the ball groove (2) being delimited by shoulders (8, 9) of the ball nuts (1), on which shoulders the balls (3) can roll under load, **characterized in that** the ball groove (2) is interrupted between its ends by at least one shoulder-free inner circumferential portion (11) of the ball nut (1).

2. Ball nut (1) according to Claim 1, in which the shoulder-free inner circumferential portion (11) extends over more than half a turn about the nut axis.

3. Ball nut (1) according to Claim 1, in which the diameter of the shoulder-free inner circumferential portion (11) is identical to or larger than the diameter of the ball groove (2) in the groove bottom (10).

4. Ball nut (1) according to Claim 1, in which the ball groove (2) is interrupted more than once by a plurality of shoulder-free inner circumferential portions (11) arranged so as to be offset to one another.

5. Ball nut (1) according to Claim 1, in which the shoulder-free inner circumferential portion (11) is formed as a part-cylindrical surface.

6. Ball nut (1) according to Claim 5, in which the axial ends of the shoulder-free inner circumferential portion (11) are parallel to a plane which is arranged transversely to the nut axis.

7. Ball nut (1) according to Claim 5, in which the axial ends of the shoulder-free inner circumferential portion (11) are parallel to a plane which intercepts the nut axis at a pitched angle of the ball groove (2).

8. Ball screw, with the ball nut (1) according to one or more of the preceding claims arranged on a threaded spindle (17), the balls (3) being arranged in at least one endless ball channel (14) coiled helically about the spindle axis of the threaded spindle (17), which ball channel (14) has a load portion (15) and a deflection portion (18) connecting a start of the load portion (15) and an end of the latter, the load portion (15) being formed by ball grooves (2, 16), coiled helically about the spindle axis and delimited by the shoulders (8, 9), of the ball nut (1) and of the threaded spindle (17), the load portion (15) being interrupted by the at least one shoulder-free inner circumferential portion (11) of the ball nut (1).

9. Ball screw according to Claim 8, in which the load portion (15), between its start and its end, is coiled over more than one turn about the spindle axis, the load portion (15) being interrupted more than once along its turns by a plurality of shoulder-free inner circumferential portions (11) of the ball nut which are arranged so as to be offset to one another.

## Revendications

1. Écrou à billes (1) pour une vis à billes, qui présente sur sa périphérie interne une gorge à billes (2) présentant de préférence plusieurs enroulements, enroulée sous forme hélicoïdale autour de l'axe de l'écrou, pour la circulation de billes (3), un élément de renvoi (5) disposé sur la périphérie extérieure de l'écrou à billes (1) étant prévu pour dévier les billes (3), lequel élément de renvoi (5) relie un début à une fin de la gorge à billes (2), et la gorge à billes (2) étant limitée par des épaulements (8, 9) de l'écrou à billes (1) contre lesquels les billes (3) peuvent circuler sous charge, **caractérisé en ce que** la gorge à billes (2) est interrompue entre ses extrémités par au moins une portion périphérique interne sans épaulement (11) de l'écrou à billes (1).

2. Écrou à billes (1) selon la revendication 1, dans lequel la portion périphérique interne sans épaulement (11) s'étend sur plus d'un demienroulement autour de l'axe de l'écrou.

3. Écrou à billes (1) selon la revendication 1, dans lequel le diamètre de la portion périphérique interne sans épaulement (11) est supérieur ou égal au diamètre de la gorge à billes (2) dans le fond de la gorge (10).

4. Écrou à billes (1) selon la revendication 1, dans lequel la gorge à billes (2) est interrompue plusieurs fois par plusieurs portions périphériques internes sans épaulement (11) disposées de manière décalée les unes par rapport aux autres.

5. Écrou à billes (1) selon la revendication 1, dans lequel la portion périphérique interne sans épaulement (11) est réalisée sous forme de surface cylindrique partielle.

6. Écrou à billes (1) selon la revendication 5, dans lequel les extrémités axiales de la portion périphérique interne sans épaulement (11) sont parallèles à un plan disposé transversalement par rapport à l'axe de l'écrou.

7. Écrou à billes (1) selon la revendication 5, dans lequel les extrémités axiales de la portion périphérique interne sans épaulement (11) sont parallèles à un plan qui coupe l'axe de l'écrou suivant un angle de pente de la gorge à billes (2).

8. Vis à billes comprenant l'écrou à billes (1) selon l'une quelconque ou plusieurs des revendications précédentes disposé sur une broche filetée (17), les billes (3) étant disposées dans au moins un canal de billes sans fin (14) enroulé sous forme hélicoïdale autour de l'axe de broche de la broche filetée (17), lequel canal de billes (14) présente une portion de charge (15) et une portion de renvoi (18) reliant un début et une fin de la portion de charge (15), la portion de charge (15) étant formée par des gorges à billes (2, 16) de l'écrou à billes (1) et de la broche filetée (17) enroulées sous forme hélicoïdale autour de l'axe de la broche, limitées par les épaulements (8, 9), la portion de charge (15) étant interrompue par l'au moins une portion périphérique interne (11) sans épaulement de l'écrou à billes (1).

9. Vis à billes selon la revendication 8, dans laquelle la portion de charge (15) s'enroule entre son début et sa fin sur plus d'un enroulement autour de l'axe de la broche, la portion de charge (15) étant interrompue plusieurs fois le long de ses enroulements par plusieurs portions périphériques internes sans épaulement (11) de l'écrou à billes disposées de manière décalée les unes par rapport aux autres.
